(19)

Europäisches
Patentamt
European
Patent Office
Office européen
des brevets

(11) **EP 2 421 122 A1**

(12) **EUROPEAN PATENT APPLICATION**

(43) Date of publication:
**22.02.2012 Bulletin 2012/08**

(21) Application number: **10172791.5**

(22) Date of filing: **13.08.2010**

(51) Int Cl.:
*H02J 17/00* (2006.01)    *H01P 7/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Hochschule Für Angewandte
Wissenschaften
FH München
80323 München (DE)**

(72) Inventors:
• **Kappeler, Franz
  82178 Puchheim (DE)**
• **Rackles, Jürgen
  82178 Puchheim (DE)**
• **Waldau, Daniela
  80333 München (DE)**

(74) Representative: **Vossius & Partner
Siebertstrasse 4
81675 München (DE)**

(54) **Wireless energy transmission with weakly coupled resonators**

(57)    The invention provides a device and method for wireless transmission of energy. An electromagnetic field used for transmitting energy is generated using a resonator system comprising a plurality of weakly coupled resonators, the resonator system having a plurality of eigenmodes with different eigenfrequencies. At least one generator is coupled to one of the resonators. The resonator is configured to operate the resonator system at one of the plurality of eigenmodes, thereby generating a spatially coherent magnetic field adapted for transmitting energy to an appliance.

Figur 1

EP 2 421 122 A1

**Description**

The present invention relates to the wireless transmission of energy, in particular electric power from a generator to one or more spatially separated consumer loads.

Wireless transmission of electric energy is generally known in the art. Known systems for wireless energy transmission are based on the provision of coupled inductors, usually in the form of coils, wherein the alternating current provided by a generator is supplied to one of the coils and thus, in turn, induces an electric voltage in the other coil(s) which then may be used to generate the desired net power at a resistive load, i.e., a consumer. Depending on the desired use of the wireless energy transmission, the spatial separation of the generator and the consumer may vary between some centimeters up to a few meters. For example, the article of J. L. Villa et al., "Design of a high frequency inductively coupled power transfer system for electric vehicle battery charger", Applied Energy, Vol. 86, pp. 355-363, 2009, mentions various applications of ICPT systems, such as contact-less power supplies for professional tools, contact-less battery charging across large air gaps for electric vehicles, compact electronic devices, mobile phones and public transport systems. Furthermore, in A. Kurs et al., "Wireless power transfer via strongly coupled magnetic resonances", Science, Vol. 317, 6th July 2007, it is specifically focused to mid-range transmission of energy and reported on the transfer of 60 watts over distances in excess of 2 meters.

Since inductive coupling between a generator and a consumer strongly decreases with increasing distance, the current through the generator coil must be increased accordingly in order to maintain the energy transfer. In order to improve the operating distance and the efficiency, both the primary generator coil and the secondary consumer coil usually is expanded with a capacitor to an oscillating circuit having a resonant frequency that depends on the inductance L of coil and the capacitance C of the capacitor. Such a system usually is operated near the resonant frequency which should be identical in both oscillating circuits at the generator and the consumer side. However, when operating systems of this kind with a resonant coupling between the generator and the consumer, stability problems may occur. For example, C.-S. Wang et al. report in "Power transfer capability and bifurcation phenomena of loosely coupled inductive power transfer systems", IEEE Transactions on Industrial Electronics, Vol. 51, No. 1, February 2004 on unstable operating conditions (bifurcations) in systems having two resonant oscillating circuits. Similarly, in J. T. Boys et al., "Stability and control of inductively coupled power transfer systems", IEE Proc. Electr. Power Appl., Vol. 147, No. 1, January 2000, describes that a system having a plurality of resonant consumer circuits that are strongly coupled to a common generator circuit, becomes unstable if the number of consumers exceeds a certain critical value.

In order to overcome these problems, it is suggested in the document of A. Kurs et al. referred to above, to operate a mid-range system of two coupled coils at their parasitic resonance frequencies of about 5 to 10 MHz, rather than an operating frequency of 10 kHz to 100 kHz that is usually used in short-range. In the system described in this document, the capacitors of the oscillating circuit are formed by the parasitic capacities of the windings of the coils. Furthermore, it is described in this article that a system of two weakly coupled resonators has two eigenmodes with frequencies $f_o - \Delta f$ and $f_o + \Delta f$, wherein $f_o$ is the (common) resonance frequency of the individual resonators. Due to the high operating frequencies, the coils however have substantial radiation losses that cause a decrease in efficiency and lead to an unwanted exposure of the surroundings with electromagnetic radiation. It is therefore suggested in WO 2009/140506 to operate a system for mid-range energy transmission having two coupled resonators at a specific frequency that leads to a destructive interference of the electromagnetic radiation in order to minimize the radiation losses.

However, there is still a need to provide an improved system for wireless transmission of electric energy, in particular, wireless transmission from one or more generators to one or more spatially separated consumers. Preferably, the system and method of the present invention should be able to transfer the energy more efficiently and/or should reduce the exposure of the surroundings with electromagnetic radiation. Further, preferably the stability of energy transmission should be increased, specifically in view of possible fluctuations in the operating parameters.

The invention provides a device and method for wireless transmission of energy. The device according to the invention comprises, among other things, a resonator system comprising a plurality of resonators. The resonators are weakly coupled, i.e., the magnetic flux shared between adjacent resonators is small compared to the flux generated by each of the resonators itself. Such a system of coupled resonators has a defined number of eigenmodes with different eigenfrequencies. The device further comprises at least one generator coupled to one of the resonators, the generator being configured to operate the resonator system at least at one, and preferably at one of the plurality of eigenmodes. For example, the generator may be an AC generator providing an alternating current to the resonator coupled to the generator that, in turn, is coupled to the remaining resonators of the system.

By operating the resonator system at an eigenmode with a specific eigenfrequency, a spatially coherent magnetic field is generated that may be used to transmit energy to an appliance. Correspondingly, the method according to the present invention comprises, among other things, the step of driving at least one generator coupled to one of the resonators in the resonator system to operate the resonator system at one of a plurality of eigenmodes.

According to an embodiment of the present invention, the generator comprises an inherently stable oscillator system. The stable oscillator system provides an excitation signal precisely oscillating at a desired eigenfrequency, thereby safely tracking temporal changes of the eigenfrequency which may be induced by fluctuations in operating parameters, for example, coupling factors, values of the LC components, temperature etc.. In an embodiment, the oscillator system comprises an amplifier and a feedback circuitry for refeeding a part of the excitation signal to the input of the amplifier in such a way, that excactly one of the plurality of eigenmodes is excited. Preferably, the generator excites the resonator system coupled thereto at the eigenfrequency of the one of the pluralities of eigenmodes or at a sub-harmonic thereof. If two or more generators are used, they may all work at the same (eigen)frequency or at different eigenfrequencies of the resonator system. More preferably, the resonator system operates at the eigenmode having the highest eigenfrequency.

The resonators may be provided in the form of oscillating circuits, i.e., circuits comprising a capacitor, an inductor and a resistive load. Usually, the inductor is formed of a coil made of round wires, litz wires , or possibly round tubes as cylindrical or planar coils. Also coils made of metal strips may generally be advantageously used in oscillating circuits for resonator systems with coupled resonators. Coils made from metal strips may be reproducibly produced with defined eigenresonance frequencies. Accordingly, coils of metal strips may also be advantageously used in the resonator system of the device according to the present invention.

The device and method according to the present invention may be used in various applications which involve the need to provide energy to different kinds of appliances. One field of application is the provision of energy to an appliance that is situated in areas that do not allow a wired energy connection. That may be, for example, transmission of energy to sensors situated in hazardous areas or medical equipment in a sterile environment. Another example is contactless energy transmission to safety systems. Another field of application is wireless charging of storage batteries, for example storage batteries in areas exposed to explosion hazards, in electric vehicles or in mobile IT equipment, such as laptops, PDAs, printers or mobile phones.

The invention further provides a receiving device, e.g. a rectifier or any kind of AC-to-DC-converter configured to receive energy from the transmission device according to the present invention. Again, when the storage battery of an electric vehicle is to be charged, the receiving device may be coupled to the drive system of the electric vehicle, providing for a less complex structure of the electric vehicle since the driving system that is anyway present in the electric vehicle is concurrently used also for providing energy to the storage battery.

The present invention will be explained in the following with reference to the appended figures, wherein

Fig. 1 schematically shows a plurality of weakly coupled oscillating circuits forming a resonator system, coupled to two generators, according to an embodiment of the present invention,

Fig. 2 schematically illustrates the eigenmodes of a system of four coupled resonators,

Fig. 3 illustrates a calculation of the currents through the coils of the system shown in Fig. 2 as a function of the frequency,

Fig. 4 exemplarily shows the calculated frequency responses of the real and imaginary part of the transfer functions describing the system of Fig. 2,

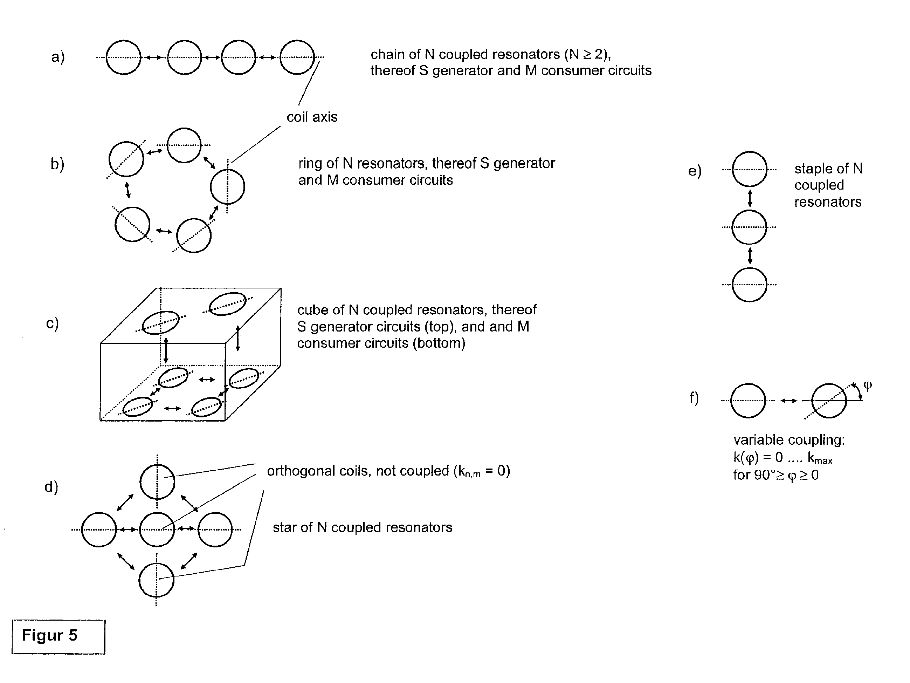

Fig. 5 illustrates different possible arrangements of the resonators in the resonator system,

Fig. 6 schematically shows an embodiment of an inherently stable oscillator system according to an embodiment of the present invention,

Fig. 7 illustrates the effect of a frequency-selective feedback,

Fig. 8 schematically shows two embodiments of the inherently stable oscillator system,

Fig. 9 illustrates a simulation model of a system according to an embodiment of the present invention including an inherently stable oscillator system coupled to four oscillating circuits,

Figs. 10a to 10c schematically illustrate embodiments of the combination of a wireless power transmission receiver with the power electronics of an electric vehicle, and

Figs. 11 a to 11c show an inherently stable oscillator system that can be operated at any subharmonic of an eigenfrequency of the resonator system, and the corresponding voltage and current waveforms.

The present invention is based in part on the idea to generate a quasistatical electromagnetic field that may be used for transmitting energy using a group of resonators that are weakly coupled among each other and thus form a resonator system having a plurality of eigenmodes. Specifically, an arrangement of N spatially separated but weakly coupled resonators form a resonator system having N eigenmodes. The physical properties of these eigenmodes may advantageously be used in a device for wireless transmission of energy.

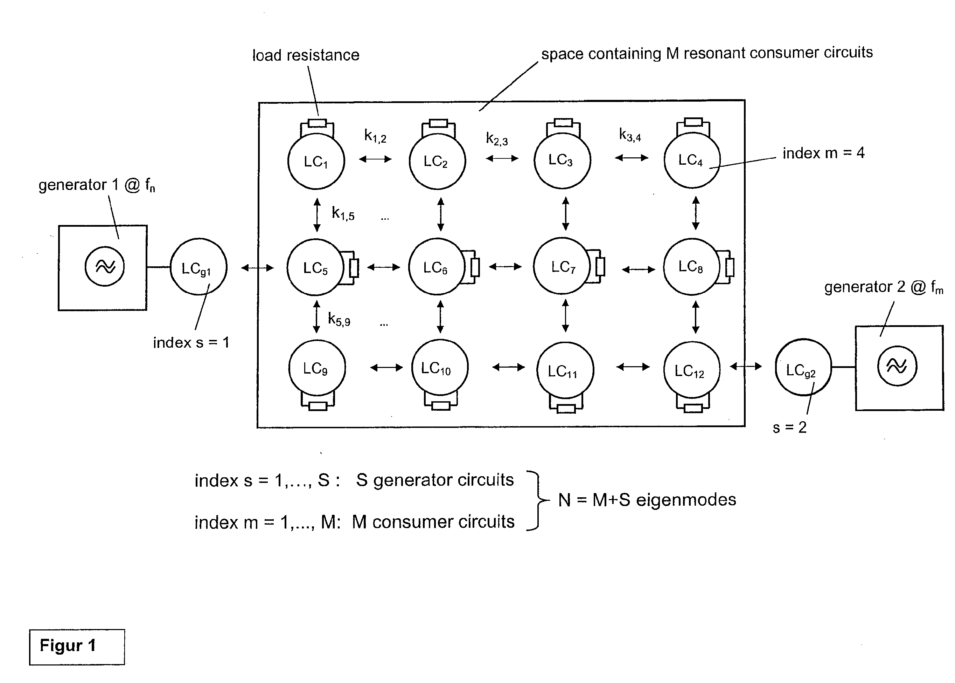

Fig. 1 schematically illustrates a device for wireless transmission comprising N spatially separated resonators (N=14 in the example of Fig. 1) in the form of LC oscillating circuits that preferably have a high Q factor

$$\left( Q_n = \sqrt{L_n / C_n} \, / R >> 1 \right).$$ S of the resonators (S=2 in the example of Fig. 1) are respectively coupled to AC current generators. The remaining resonators M=N-S include a resistive load R. The individual reso-

nance frequency $f_0 = \dfrac{1}{2\pi\sqrt{L_n C_n}}$ of each one of the resonators, i.e., the resonance frequency of the non-coupled resonators, preferably is identical for all N resonators. The values of the inductance $L_n$ and the capacitance $C_n$ for each resonator may be different, however.

The inductive coupling among the resonators depends, among other things, on their spatial distance. Specifically, the distance between the resonators should be chosen such that a weak coupling is achieved, that is, the coupling factor $k_{n,m}$ should be less than one:

$$k_{nm} = M_{nm} / \sqrt{L_n L_m} << 1.$$ In this formula, $M_{nm}$ is

the mutual inductance between the $n^{th}$ and the $m^{th}$ resonator, $L_n$ and $L_m$ are the inductances of the resonators, respectively. In order to ensure a weak coupling, $k_{nm}$ should be less than 0.5, and more preferably less than 0.1.

The mutual coupling of the N resonators in the system shown in Fig. 1 causes the system to have N well-defined eigenmodes. The N eigenmodes of the system each represent a stable temporal and spatial oscillation, wherein all N resonators oscillate synchronously at a specific eigenfrequency at a fixed mutual phasing. Due to a fixed temporal phase relation of the coil currents in each of the N resonators, a spatially coherent magnetic field is formed in the surrounding of the resonator system by the superposition of the three-dimensional field distribution of each single coil in each resonator.

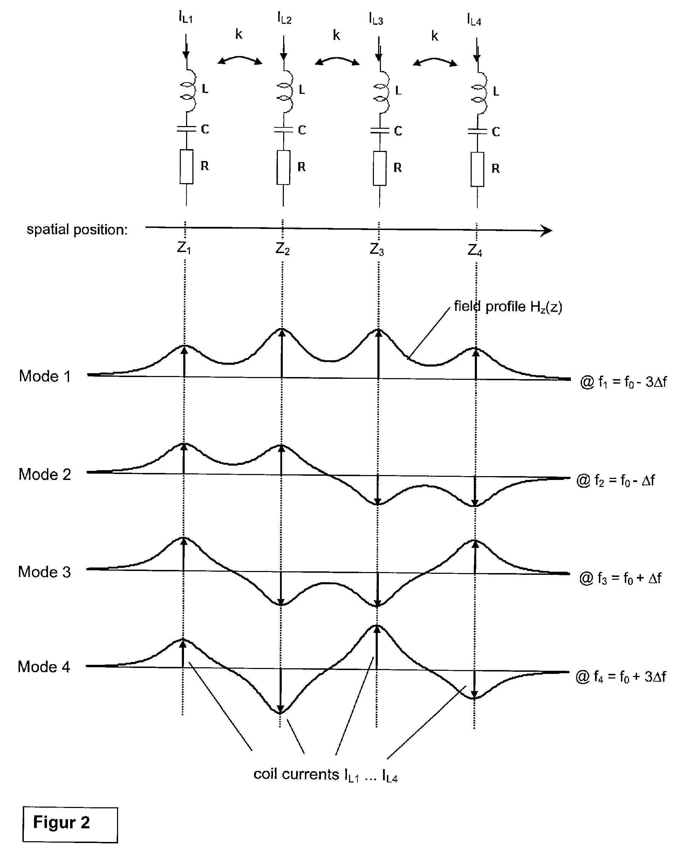

A specific example of four coupled resonators is shown in Fig. 2. The four resonators are arranged at positions $Z_1$, $Z_2$, $Z_3$ and $Z_4$ and each comprises identical components L, C, R arranged in a series. The inductive coupling factor $k_{n,m} = k$ between the $n^{th}$ and the $m^{th}$ resonator circuits depends on the distance between the circuits and is small, i.e., k<<1. Each resonator circuit has the (identical) resonance frequency $f_0 = \dfrac{1}{2\pi\sqrt{L\,C}}$ ,

Fig. 2 additionally shows a diagram of the coil currents in each one of the resonator circuits and the resulting magnetic field for the four possible eigenmodes as a function of the position (in one dimension only). The fundamental mode (mode 1) has the eigenfrequency $f_1 = f_0$-$3\Delta f$ . In this mode, all coil currents are in phase so that the magnetic fields of all individual resonators positively add up to the resultant magnetic field. In mode 2 having the eigenfrequency $f_2 = f_0 - \Delta f$, two adjacent resonators oscillate in phase, whereas the two pairs oscillate out of phase, so that the magnetic field distribution has a root. Accordingly, mode 3 leads to a magnetic field distribution having two roots. Finally, in mode 4, all resonators oscillate out-of-phase, so that the resulting field distribution shows three roots, i.e., three phase reversals. As it is obvious from the field distribution illustrated in Fig. 2, the highest order mode 4 is the mode with the lowest magnetic energy density stored between the resonators. Even though Fig. 2 only shows the field distribution in one dimension, the same is true for the three-dimensional representation of the magnetic field distribution and the resultant energy density. Accordingly, as can be seen from Fig. 2, the highest order mode is least prone to interact with other magnetically sensitive objects nearby.

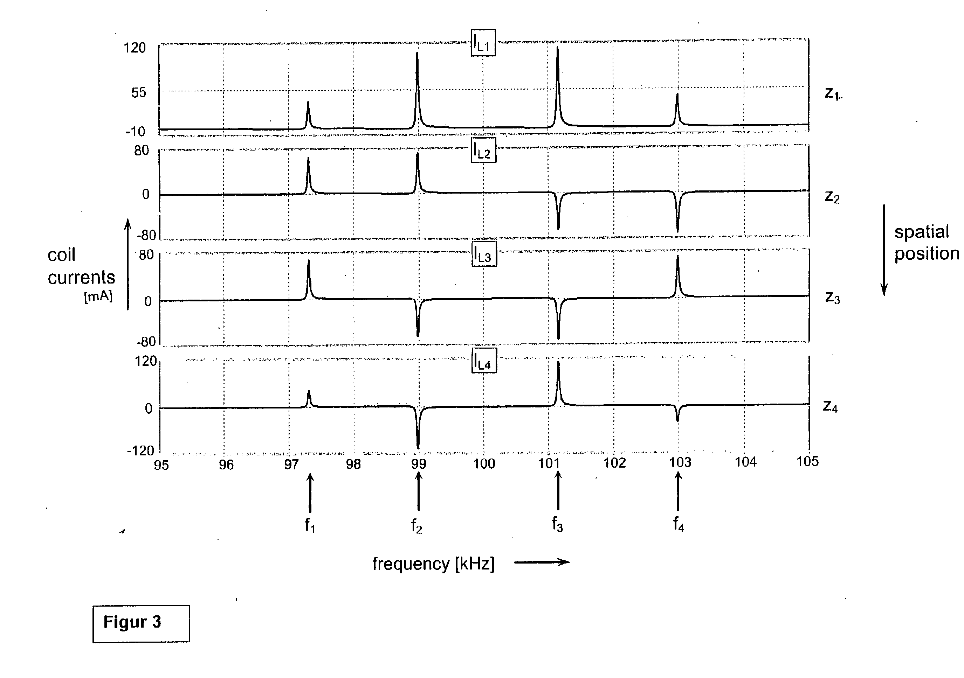

In Fig. 3, the calculated coil currents for the resonator system shown in Fig. 2 are plotted as a function of the frequency. In the simulation of Fig. 3, the resonance frequency of the individual resonators is $f_0$=100 kHz, the coupling factor is k=0,035. As can be seen from Fig. 3, the four coil currents all have maxima at the eigenfrequencies $f_1$ to $f_4$ of the resonator system. The mode-specific distribution of the amplitudes and phases can be seen at the different eigenfrequencies $f_n$, the highest mode 4 has a frequency $f_4$ close to 103 kHz. As indicated above, it is preferred to operate the system comprising N coupled resonators exactly at the frequency $f_N$ of the highest order eigenmode since in this mode, the energy density in the volume of the resonator system is as low as possible. Accordingly, unwanted electromagnetic interaction may be avoided and the system works as efficient as possible. However, it is equally possible to operate the system at a different eigenmode by applying a signal to the system at the respective eigenfrequency. Also, it is possible to additionally apply different frequencies to the system if more than one generator is used, as shown, for example, in Fig. 1.

The operating frequency of the system may be chosen by adapting the dimensions of the resonators. It is preferred to operate the system at a low frequency in order to avoid radiation losses caused by electromagnetic waves. Therefore, the typical dimension of a resonator preferably is smaller as 1/20 of the wavelength $\lambda_0 = c\,/\,f_0$ .

The inductive coils are an important component in the individual resonators of the resonator system used according to the present invention. Specifically, it is important to be able to provide coils having well defined characteristics, in particular a well defined inductance. While resonator coils usually are made of round wires, litz wires, or round tubes in the form of cylindrical or planar coils, it may be advantageous to use coils made of metal strips in the resonators of the device according to the present invention. The metal strip should be arranged in parallel to the coil axis and thus parallel to the magnetic field of the coil. By selecting a suitable thickness and suitable dielectric properties of the insulation material between the metal strips forming the coil, the distance between the individual layers of the metal strip can be controlled and thus, the capacity of the individual windings and the resulting losses due to the proximity effect may be defined. Thus, the resonance frequency of the coil can be controlled when manufacturing the coil. Furthermore, the use of a metal strip instead of a round wire reduces the skin effect on the windings which leads to an improved quality, i.e., Q factor, of the coil compared to a coil made of a round wire having equal weight. Furthermore, when using a metal strip as a conductive material of the coil, the ratio of the surface to the cross section can be increased, allowing higher current densities, and thus improved thermal characteristics of the coil.

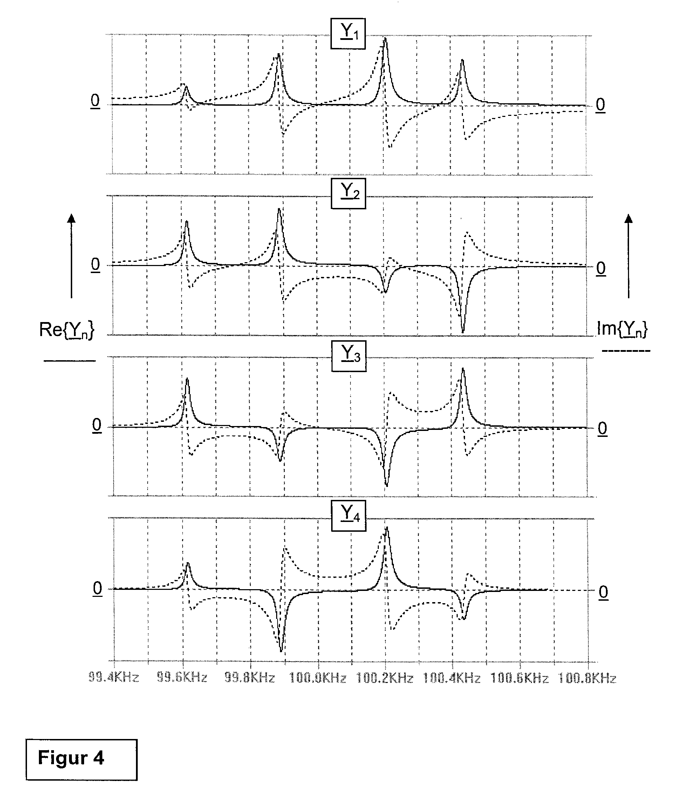

In order to be able to efficiently transfer power from the generator with a real internal resistance $R_G$ coupled to one or more consumers, such as the resonators as shown in Fig. 2, each one of the consumers must fulfill the known complex matching conditions. That means that the imaginary part of the transfer function from the generator to each of the consumers must be zero (reactive-power compensation) and, vice versa , the real parts of all consumers have to be equal to the resistances seen towards the generator. Fig. 4 shows the real and imaginary parts of the transfer functions of the consumers, i.e., resonators, in a system as schematically shown in Fig. 2, wherein the first resonator is coupled to an AC current generator. That is, the exemplary system includes one generator circuit (S=1) and three consumer circuits (N=3) and thus has N=M+S=4 eigenmodes. In case of the serial resonator circuits shown in Fig. 2, the transfer functions from the generator to each one of the consumers, that describe the system, are given by the complex transadmittances $Y_n(w) = I_{Ln} / U_1$, wherein $Yn(w)$ is the admittance seen by the generator towards the $n^{th}$ resonator , as a function of the angular frequency ω, $I_{Ln}$ is the current through the $n^{th}$ resonator coil and $U_1$ is the voltage at the output of the generator. Specifically, $Y_1(w)$ is the input admittance of the complete resonator system as seen by the generator.

As can be seen from the calculated frequency responses of the real and imaginary part of the four above-noted transmittances shown in Fig. 4, the imaginary part of all transmittances is zero and the real part has a mode specific value $R_n$ at the four eigenfrequencies of the system. That is, at these frequencies, an optimal energy transfer from the generator to the consumers is ensured, as determined by the coupling conditions. Adapting a load resistor having a certain value to a generator may be done using an impedance converter stage that transfers the load resistance to the resistance $R_n$ needed in the system, for example a transformer having the necessary winding ratio or an electronic impedance converter. Accordingly, operating the system at one of the eigenfrequencies of the system ensures simultaneous power matching of all consumers and thus maximizes the transfer efficiency of the system. Further, the real input admittance enables the so called "zero-current switching" operation of the generator, which is a prerequisite for a high DC-to-AC efficiency of the power source. As a consequence, operating the power transfer system according to the present invention also optimizes its overall efficiency, which is the product of the generator efficiency and the transfer efficiency.

If the resonators are formed by standard LC circuits, various arrangements of the resonator circuits are possible to achieve coupling between the circuits. For example, a linear, circular or cubic arrangement may be chosen. It is noted in this context that not only the distance between the circuits controls the mutual coupling of the resonators. The coupling may also be chosen by arranging the coil axis of two adjacent circuits at a certain angle, wherein orthogonal coils are not coupled at all. The components of the LC circuits, i.e., the inductance L, the capacitance C and the resistor R, may be arranged in series or parallel. When using a series arrangement, it is important for the stability of the power transmission system that the generator possesses the characteristics of a voltage source having a low impedance $R_G$. This ensures that the current amplitude becomes maximum in case of a resonance and turns to zero in case of strong deviations from the resonance frequency (open circuit stability). When using a parallel oscillating circuit, the suitable generator is a current source with a high impedance $R_G$, so that the voltage is maximum at the resonance frequency and tends to zero at high and low frequencies (short circuit stability). Both generator types may be transformed into the other one using an impedance converter stage, as discussed above.

In order to operate the resonator arrangement at one of the eigenfrequencies as described above, the generator should be tuned to the desired eigenfrequency as precisely as possible. Under practical operating conditions, however, a temporal fluctuation of the eigenfrequency may be caused by load changes or fluctuations of the characteristics of the system, e.g., coupling factors, values of the LC components, temperature etc. According to an embodiment of the invention, the at least one generator comprises a frequency selective feedback path adapted to select any one of the eigenfrequencies. The feedback path may comprise a power amplifier, a branch circuit, an isolation amplifier and an electrically tunable band-pass filter. The power amplifier included in the feedback path should be adapted for zero-voltage and/or zero-power switching.

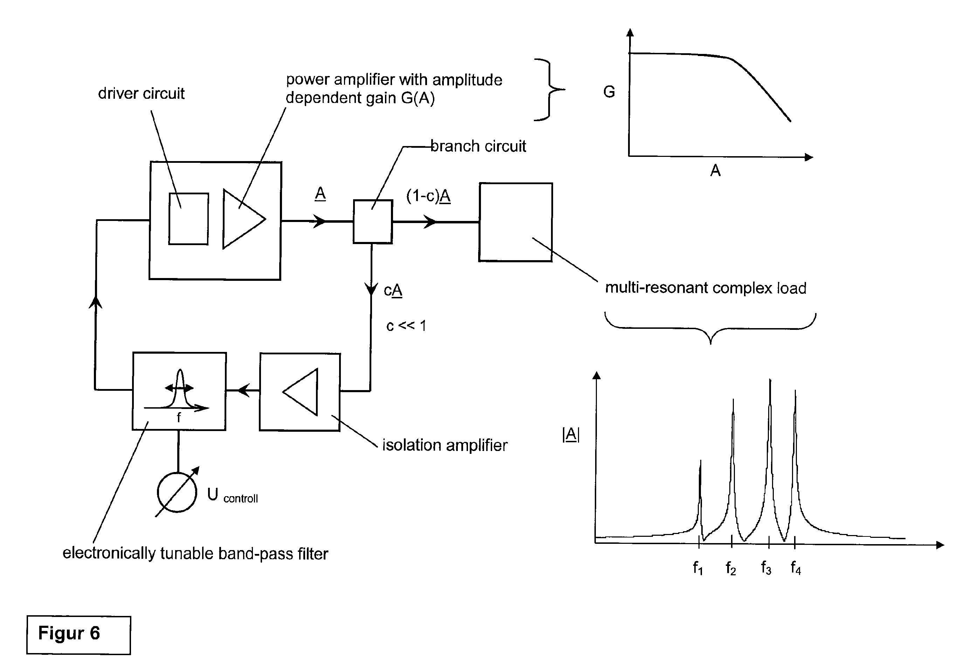

To precisely control the frequency supplied by the generator, an inherently resonant oscillator system such as shown in Fig. 6 may be used. The oscillator system according to Fig. 6 comprises the following components: a power amplifier with a high efficiency (for example, a class C-amplifier, class D-amplifier, class E-amplifier, or bridge amplifiers with e. g. insulated gate bipolar transistors IGBTs or MOSFETs) including the necessary driver electronics, a multi-resonant, complex load impedance or admittance, respectively, formed by the input impedance/admittance of a coupled resonator system as shown, for example, in Fig. 1, a branch circuitry that outcouples a small portion of the output signal A (current $I_L$ or voltage $U_L$, respectively) to a feedback path, an isolation amplifier with frequency independent gain and high reverse isolation, and a band-pass filter having an electronically tunable center frequency. The positive feedback needed for actuating and driving the oscillation is achieved by refeeding a small portion of the output signal to the input of the amplifier in phase. The small feedback signal first is amplified by the isolation amplifier in a frequency-independent way. The amplified feedback signal is then fed to an electrically tunable narrow-band filter. Thereby, the isolation amplifier causes a decoupling of the band-pass filter from the multi-resonant load. Thus, the occurrence of unwanted additional eigenfrequencies is avoided. The output signal of the band-pass filter that has been amplified in a frequency-selective way, then forms the input signal for the power amplifier. By means of this frequency-selective feedback mechanism (FSFB = frequency-selective feedback), it is achived that the oscillator stably oscillates at the desired eigenfrequency $f_n$ of the resonator system that is chosen by the control voltage $U_{control}$. The amplitude-dependent gain G(A) of the power amplifier thereby ensures that the oscillation amplitude finally sets to a stable value.

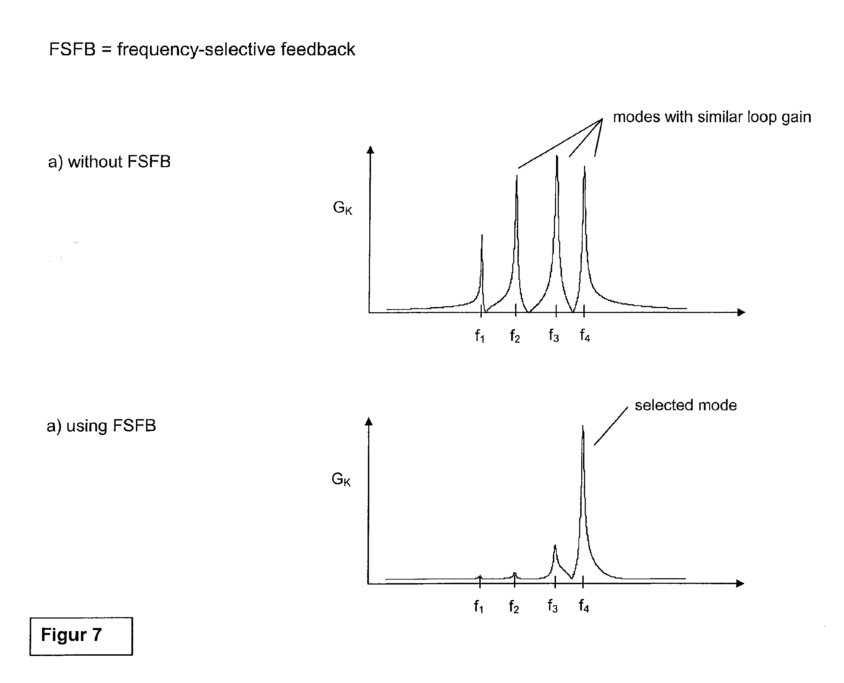

The effect of the frequency-selective feedback is illustrated in Fig. 7: the possible relevant frequencies of an oscillator are determined by the maxima, i.e., resonances, of the gain of the open feedback loop. Since the loop gain $G_K(\omega)$ is proportional to the complex load impedance or load admittance, by suitably choosing the feedback mode (current feedback or voltage feedback), the loop gain has the same resonances as the multi-resonant load. Fig. 7a shows the situation without frequency-selective feedback: after a transient oscillation at multiple frequencies, the oscillator will operate at that eigenfrequency $f_n$ having the highest loop gain (modal gain). Since, however, the adjacent eigenfrequencies may have similar gains, depending on the coupling arrangement, there is a risk of mode hopping, i.e., frequent change of the eigenfrequencies due to load changes and variations of the coupling factors. This effect is very efficiently prevented by substantially increasing the gain of one of the eigenfrequencies using the electronically tunable narrow-band filter shown in Fig. 6. This mode-selective effect of the frequency-selective feedback is illustrated in Fig. 7b. The bandwidth of the band-pass filter must be smaller than the distance between the resonances (that is typically 100 Hz to some kHz). A further advantage of the frequency-selective feedback is that no dedicated feedback path is needed for stabilizing the system on the consumer side to which energy is to be transferred using the system.

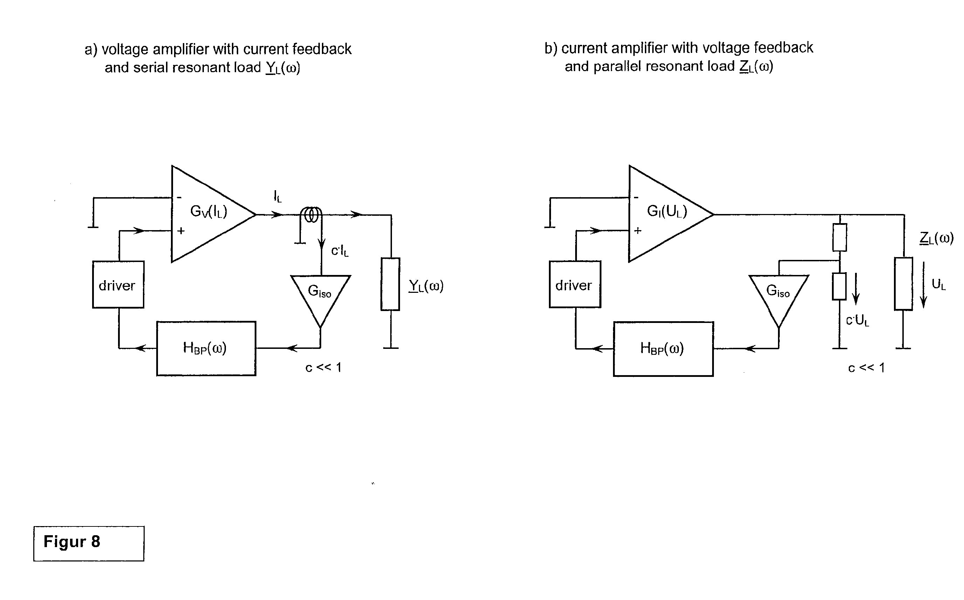

It turns out that not every combination of amplifier type, complex load and feedback type leads to a stable oscillation of the eigenfrequency. Therefore, it is important to carefully choose the arrangements of the intrinsically stable oscillator system for the energy transfer system using frequency-selective feedback. One possible arrangement which ensures, that the oscillator system with a multi-resonant load is stable against load changes and frequency fluctuations, is shown in Fig. 8a: A voltage amplifier -i.e. an amplifier whose output has the characteristic of a voltage source- works on a load admittance $\underline{Y}_L(\omega)=\underline{Y}_1(\omega)$ with series resonances and is fed back with a signal that is proportional to the load current (open circuit stability).. Alternatively, in the arrangement shown in Fig. 8b, a current amplifier -i.e. an amplifier whose output has the characteristic of a current source- works on a load impedance $\underline{Z}_L(\omega)=\underline{Z}_1(\omega)$ with parallel resonances and is fed back with a signal that is proportional to the load voltage (short circuit stability). It should be noted, that a voltage amplifier can be realized by a class D-amplifier, whereas a current amplifier is obtained using a class E-amplifier.

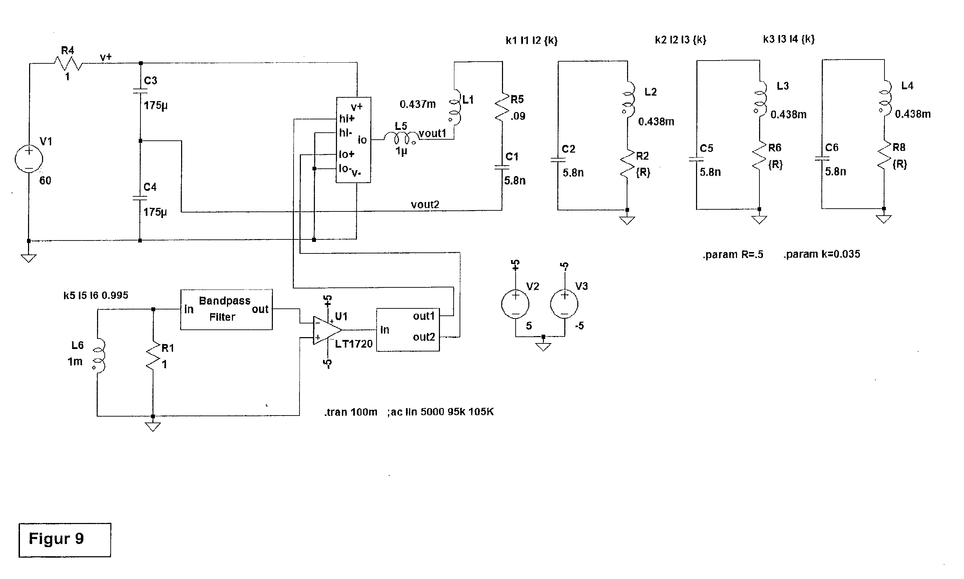

In Fig. 9, a simulation model is shown that was used to simulate a fourth order system with frequency-selective feedback (S=1, M=3, N=M+S=4), including transient oscillation, mode selection and stability against parameter fluctuations.

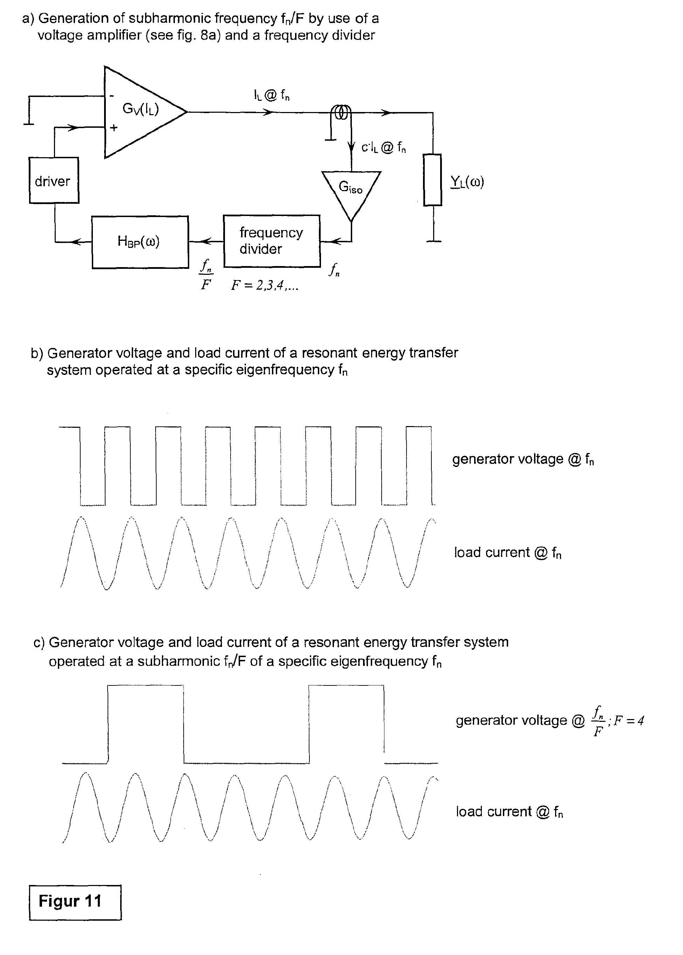

Because of the band-pass filter characteristic of the resonant load it is not necessary that the output waveform of the generator is sinusoidal. It is possible to operate e. g. a class D-amplifier with a switching frequency equal to the desired eigenfrequency, thus generating a rectangular output voltage. In this case the generator is operated under a zero current switching condition with minimized switching losses (see fig. 11b).

Rather than operating the generator at exactly one of the eigenfrequencies of the system, it may be advantageous to operate the generator at a frequency that corresponds to a subharmonic of the eigenfrequency of the resonator system. This may be done, for example, with the arrangement shown in Fig. 11 a: here, the frequency $f_n$ of the feedback signal $c \cdot I_L$ is divided by a factor F = 2,3,4,..., so that the oscillator operates at a subharmonic frequency $f_{sub} = f_n/F$. The shape of the oscillation generated by the oscillator should be optimized so, that the desired harmonic is present in the output signal in a well pronounced manner as can be seen in fig 11c. By exciting the resonator system with a subharmonic of one of its eigenfrequencies, switching losses in the oscillator may be reduced which allows the use of cheaper semiconductors and reduces the necessary cooling. It is also possible, to use semiconductors devices with higher current or voltage ratings, since the permissible switching frequency of high power devices is generally lower than that of low power devices. Furthermore, given a specific maximum switching frequency $f_{switch} = f_{sub}$, the resonator circuits can be operated at a higher harmonic frequency $f_n = F \cdot f_{sub}$, where the quality factors of the resonators have their maximum values.

In order to be able to load the storage battery of an electric vehicle and generally loading storage batteries of all kinds of appliances, it is necessary to transfer the alternating-current (AC) voltage provided by the energy transmission system to a direct-current (DC) voltage. However, electric vehicles include power electronics that transform the DC voltage of the battery into AC voltage for the motor when driving, and vice versa when recuperating AC voltage of the motor to charge the battery. These power electronics of electric vehicles may thus be used to re-charge the battery when loading the battery with the wireless transfer unit according to the present invention. By using the existing electronic, an additional circuitry for adjusting the receiver side of the wireless power transmission system to the requirements of the battery charge may be avoided.

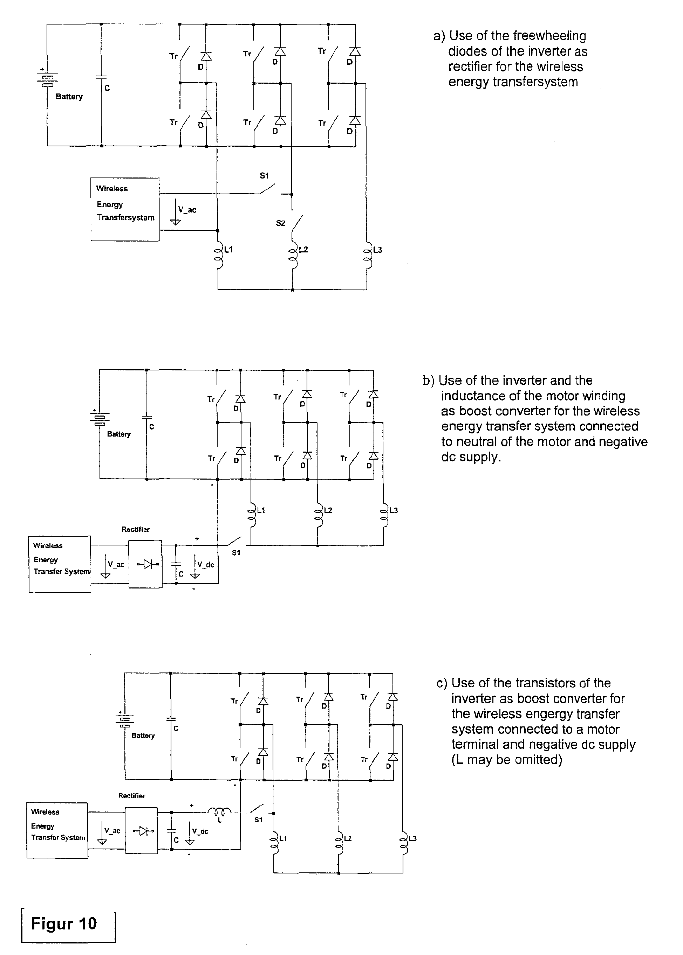

In accordance with an embodiment of the present invention, a receiver for the wireless energy transfer system may be incorporated in the driving system of the electric vehicle in two ways. The inverter of the driving system may comprise switching transistors Tr and free-wheeling diodes D. Fig. 10a shows the use of the free-wheeling diodes of the inverter as diodes for rectifying the AC voltage from the wireless energy transmission system. Thereby, the amplitude of the AC voltage must be adjusted so that optimal charging of the battery may be achieved. Accordingly, details of the required voltage to charge the battery must be made available to the energy transmission system. During charge, switch S1 is closed and switch S2 is opened in order to separate the motor, which is indicated by windings L1, L2 and L3, from the inverter.

In the second embodiment shown in Fig. 10b, the inverter, consisting of transistors Tr and free-wheeling diodes D, is used as a boost-converter while loading the battery. The output voltage of the wireless energy transmission system is rectified using a rectifier. In addition to the rectifier, a filter capacitor may be used. When loading the battery, switch S1 is closed. The negative terminal of the wireless power transmission system is connected to the negative terminal of the battery, the positive terminal is connected via switch 51 to the neutral point of the motor, which again is illustrated by windings L1 to L3. The inverter can now be operated as a boost converter, the inductance of the motor windings being used as storage chokes. The boost converter sets the rectified output voltage of the wireless energy transmitting system to a value that is adapted to the level of the battery voltage. As three half-bridges are available for the boost converter, it is also possible to operate the boost converter as a multi-phase boost converter. In this way, the power loss at all half-bridges of the inverter is evenly distributed and ripples of the voltage at the filter capacitor on the output side of the rectifier of the wireless energy transmitting system is reduced.

If the neutral point of the engine is not accessible, the arrangement shown in Fig. 10c may be used. According to Fig. 10c, an additional storage choke L is inserted and the wireless energy transmitting system is connected via switch S1 with the motor supply lines. By synchronizing one or all of the lower transistors of the inverter, the inverter works as a boost converter which sets the wireless energy transmitting system to a desired value.

By combining the driving system and the circuitry for coupling to the wireless energy transmitting system, the packaging in the vehicle is made simpler since the system needs less space. Furthermore, costs may be saved and the reliability may be improved since less components are needed. For back-fitting the wireless energy transmitting system to existing driving systems, the arrangement shown in Fig. 10c is particularly suitable.

With the present invention, wireless power transmission to a large number of consumers in a three-dimensional space may be achieved. Furthermore, the overall efficiency is improved by operating the system at one of its eigenfrequencies. When using the eigenmode with the highest eigenfrequency, the least possible amount of electromagnetic energy is stored in the environment. By means of frequency-selective feedback to a power amplifier, a self-stabilizing oscillator circuit precisely operating at an user-selectable eigenfrequency is realized.

## Claims

1. A device for wireless transmission of energy comprising:

    a resonator system comprising a plurality of weakly coupled resonators, the resonator system having a plurality of eigenmodes with different eigenfrequencies; and
    at least one generator coupled to one of the resonators;
    wherein the generator is configured to operate the resonator system at one of the plurality of eigenmodes, thereby generating a spatially coherent magnetic field adapted for transmitting energy to an appliance.

2. The device according to claim 1, wherein the at least one generator comprises an inherently stable oscillator system to provide an excitation signal to the resonator coupled to the generator that stably oscillates at a predetermined frequency.

3. The device according to claim 2, wherein the oscillator system comprises an amplifier and a feedback circuitry for refeeding a part of the excitation signal to the amplifier.

4. The device according to claim 1, 2, or 3, wherein the at least one generator is adapted to excite the resonator coupled to the generator at the eigenfrequency of said one of the

**5.** The device according to any one of the preceding claims, wherein the at least one generator comprises a frequency selective feedback path adapted to select any one of the eigenfrequencies.

**6.** The device according to claim 5, wherein the feedback path comprises a power amplifier, a branch circuit, an isolation amplifier and an electrically tunable band-pass filter.

**7.** The device according to claim 6, wherein the power amplifier is adapted for zero-voltage and/or zero-power switching.

**8.** The device according to any one of the preceding claims, wherein the at least one generator is adapted to excite the resonator coupled to the generator at a frequency that is a subharmonic of the eigenfrequency of said one of the plurality of eigenmodes.

**9.** The device according to any one of the preceding claims, the device comprising two or more generators, the generators being coupled to different resonators and being adapted to excite the respective resonators at different eigenfrequencies.

**10.** The device according to any one of the preceding claims, wherein the at least one generator is configured to operate the resonator system at the eigenmode having the highest eigenfrequency.

**11.** The device according to any one of the preceding claims, wherein all resonators of the resonator system have the same resonance frequency.

**12.** The device according to any one of the preceding claims, wherein the resonators comprise an oscillating circuit.

**13.** The device according to claim 12, wherein the oscillating circuit comprises a coil formed of a sheet metal strip.

**14.** The device according to any one of the preceding claims, wherein the appliance comprises a storage battery, in particular a storage battery of an electric vehicle, the device being configured to charge the storage battery.

**15.** A receiving device configured to receive energy from a device for wireless transmission of energy, preferably the device according to any one of the preceding claims, which is arranged in the drive system of an electric vehicle and coupled to the storage battery of the electric vehicle by using the power electronics of the drive system

**16.** A method for wirelessly transmitting energy to an appliance, the method comprising the step of:

> providing a resonator system comprising a plurality of weakly coupled resonators, the resonator system having a plurality of eigenmodes with different eigenfrequencies;
> driving at least one generator coupled to one of the resonators to operate the resonator system at one of the plurality of eigenmodes, thereby generating a spatially coherent magnetic field adapted for transmitting energy to an appliance.

space containing M resonant consumer circuits

load resistance

index m = 4

generator 2 @ $f_m$

$LC_{g2}$

s = 2

$LC_4$  $LC_8$  $LC_{12}$

$k_{3,4}$

$LC_3$  $LC_7$  $LC_{11}$

$k_{2,3}$

$LC_2$  $LC_6$  $LC_{10}$

$k_{1,2}$  ...

$k_{1,5}$  $k_{5,9}$

$LC_1$  $LC_5$  $LC_9$

$LC_{g1}$

index s = 1

generator 1 @ $f_n$

index s = 1,..., S :   S generator circuits

index m = 1,..., M:  M consumer circuits

N = M+S eigenmodes

**Figur 1**

Figur 2

Figur 3

**Figur 4**

EP 2 421 122 A1

a) chain of N coupled resonators (N ≥ 2), thereof S generator and M consumer circuits

coil axis

b) ring of N resonators, thereof S generator and M consumer circuits

e) staple of N coupled resonators

c) cube of N coupled resonators, thereof S generator circuits (top), and and M consumer circuits (bottom)

f)

variable coupling:
$k(\varphi) = 0 \dots k_{max}$
for $90° \geq \varphi \geq 0$

d) orthogonal coils, not coupled $(k_{n,m} = 0)$

star of N coupled resonators

**Figur 5**

13

Figur 6

EP 2 421 122 A1

FSFB = frequency-selective feedback

a) without FSFB

modes with similar loop gain

$G_K$

$f_1$    $f_2$    $f_3$    $f_4$

a) using FSFB

selected mode

$G_K$

$f_1$    $f_2$    $f_3$    $f_4$

**Figur 7**

EP 2 421 122 A1

a) voltage amplifier with current feedback
and serial resonant load $\underline{Y}_L(\omega)$

b) current amplifier with voltage feedback
and parallel resonant load $\underline{Z}_L(\omega)$

EP 2 421 122 A1

Figur 8

Figur 9

a) Use of the freewheeling diodes of the inverter as rectifier for the wireless energy transfersystem

b) Use of the inverter and the inductance of the motor winding as boost converter for the wireless energy transfer system connected to neutral of the motor and negative dc supply.

c) Use of the transistors of the inverter as boost converter for the wireless engergy transfer system connected to a motor terminal and negative dc supply (L may be omitted)

**Figur 10**

a) Generation of subharmonic frequency $f_n/F$ by use of a
voltage amplifier (see fig. 8a) and a frequency divider

b) Generator voltage and load current of a resonant energy transfer
system operated at a specific eigenfrequency $f_n$

generator voltage @ $f_n$

load current @ $f_n$

c) Generator voltage and load current of a resonant energy transfer system
operated at a subharmonic $f_n/F$ of a specific eigenfrequency $f_n$

generator voltage @ $\dfrac{f_n}{F}$; $F = 4$

load current @ $f_n$

Figur 11

## EUROPEAN SEARCH REPORT

**Application Number**

EP 10 17 2791

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/022181 A1 (QUALCOMM INC [US]; COOK NIGEL [US]; SIEBER LUKAS [CH]; WIDMER HANSPETE) 25 February 2010 (2010-02-25) | 15 | INV.<br>H02J17/00<br>H01P7/00 |
| Y | * paragraph [0036] - paragraph [0043]; figure 5, * | 1-14,16 | |
| X,D | US 2009/284083 A1 (KARALIS ARISTEIDIS [US] ET AL) 19 November 2009 (2009-11-19) | 15 | |
| Y | * page 9 *<br>* paragraph [0074] - paragraph [0075] * | 1-14,16 | |

TECHNICAL FIELDS
SEARCHED      (IPC)

H02J
H01P

The present search report has been drawn up for all claims

| Place of search | Date of completion of the search | Examiner |
|---|---|---|
| Munich | 8 March 2011 | La Casta Muñoa, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 17 2791

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2011

| Patent document cited in search report | | Publication date | Patent family member(s) | | Publication date |
|---|---|---|---|---|---|
| WO 2010022181 | A1 | 25-02-2010 | US | 2010127660 A1 | 27-05-2010 |
| US 2009284083 | A1 | 19-11-2009 | AU | 2009246310 A1 | 19-11-2009 |
| | | | CA | 2724341 A1 | 19-11-2009 |
| | | | EP | 2281322 A1 | 09-02-2011 |
| | | | WO | 2009140506 A1 | 19-11-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009140506 A

**Non-patent literature cited in the description**

- **J. L. VILLA et al.** Design of a high frequency inductively coupled power transfer system for electric vehicle battery charger. *Applied Energy,* 2009, vol. 86, 355-363
- **A. KURS et al.** Wireless power transfer via strongly coupled magnetic resonances. *Science,* 06 July 2007, vol. 317
- **C.-S. WANG et al.** Power transfer capability and bifurcation phenomena of loosely coupled inductive power transfer systems. *IEEE Transactions on Industrial Electronics,* February 2004, vol. 51 (1
- **J. T. BOYS et al.** Stability and control of inductively coupled power transfer systems. *IEE Proc. Electr. Power Appl.,* January 2000, vol. 147 (1